# EUROPÄISCHE PATENTSCHRIFT

(11) **EP 2 118 617 B1**
(45) Veröffentlichungstag und Bekanntmachung des Hinweises auf die Patenterteilung: **22.09.2010**
(21) Anmeldenummer: 08707641.0
(22) Anmeldetag: 09.02.2008
(51) Int. Cl.: G01B 11/00

(54) **ABTASTSENSORSYSTEM ZUM BERÜHRUNGSLOSEN OPTISCHEN ABTASTEN VON OBJEKTOBERFLÄCHEN**
SCANNING SENSOR SYSTEM FOR THE NON-CONTACT OPTICAL SCANNING OF OBJECT SURFACES
SYSTÈME CAPTEUR POUR LE PALPAGE OPTIQUE SANS CONTACT DE SURFACES D'OBJETS

(30) Priorität: 16.02.2007 DE 102007008361
(43) Veröffentlichungstag der Anmeldung: 18.11.2009
(73) Patentinhaber: ISIS Sentronics GmbH, 68199 Mannheim (DE)
(72) Erfinder: GODBILLON, Pascal, 74074 Heilbronn (DE); LUTAT, Bernd, 68199 Mannheim (DE); KNÜTTEL, Alexander, 69488 Birkenau (DE)
(74) Vertreter: Durm & Partner
(86) Internationale Anmeldenummer: PCT/EP2008/000998
(87) Internationale Veröffentlichungsnummer: WO 2008/098716

(56) Entgegenhaltungen:
- EP-A- 1 580 521
- WO-A-2007/079837
- DE-A1- 3 834 117
- DE-U1- 20 008 721

## Beschreibung

Die Erfindung betrifft ein Abtastsensorsystem zum berührungslosen optischen Abtasten von Objektöberflächen.

Auf zahlreichen Anwendungsgebieten stellt sich die Aufgabe, die Oberfläche eines Objektes genau abzutasten. Der Begriff "abtasten" (englisch: "to scan") ist dabei allgemein in dem Sinn zu verstehen, dass er sich auf jedes Verfahren bezieht, bei dem eine Mehrzahl von Messpunkten an einer Oberfläche gewonnen werden, um eine Information über deren Form im Raum zu erhalten. Insbesondere geht es um die Überprüfung der exakten Dimensionen eines Objektes ("dimensionales Prüfen"), aber auch um Struktureigenschaften der Oberfläche, also beispielsweise deren Rauhigkeit. Die Oberflächenabtastung kann auch die Untersuchung einer dünnen oberflächennahen Schicht des Objektes einschließen, in die das Licht eindringt.

Es sind unterschiedliche optische Abtastsensorsysteme bekannt. Beispielsweise kann deren Funktion auf der Bildverarbeitungstechnik basieren. Das Messobjekt wird dabei mit einer speziellen Beleuchtüngstechnik beleuchtet und mittels Videotechnik beobachtet, wobei die Ergebnisse mittels Bildverarbeitungssoftware ausgewertet und in die gewünschte Dimensionsinformation umgewandelt werden. Bekannt sind auch Laserabstandssensoren (EP 1 580 521 A2), die speziell zum schnellen Messen der Ebenheit des Messobjektes und zur Messung von wenig gekrümmten Freiformflächen empfohlen werden.

Die vorliegende Erfindung bezieht sich insbesondere auf mit Niederkohärenz-Interferometrie arbeitende optische Abtastsensorsysteme. Dabei erfolgt die Abstandsabtastung (Gewinnung einer hochpräzisen Information über den Abstand zwischen dem Sensorkopf und der Objektoberfläche) dadurch, dass Licht einer niederkohärenten (spektral breitbandig emittierenden) Lichtquelle in zwei Lichtwege, nämlich einen Messlichtweg, der zu der abzutastenden Oberfläche, führt und einen Referenzlichtweg aufgeteilt wird und die beiden Teillichtwege vor dem Auftreffen auf einem Detektor derartig zusammengeführt werden, dass sie miteinander interferieren. In der englischsprachigen Literatur werden Verfahren, bei denen eine Abstandsabtastung mittels Niederkohärenzinterferometrie erfolgt, auch als "Low Coherence Distance Scan" (LCDS) bezeichnet. Solche Verfahren und entsprechende Geräte sind bekannt, wobei unterschiedliche Aspekte in der WO 03/073041 A1, der WO2005/088241 A1 und in der internationalen Patentanmeldung PCT/EP2006/011586 beschrieben werden. Deren Inhalt wird durch Bezugnahme hiermit zum Inhalt der vorliegenden Anmeldung gemacht.

Um das Abtastsensorsystem an unterschiedliche Anforderungen flexibel anpassen zu können, ist es zweckmäßig, unterschiedliche Optikeinheiten vorzusehen, die auswechselbar an einem Basisteil, das hier als Sensorkopf bezeichnet wird, befestigt werden können. Auch wenn das System keine unterschiedlichen Optikeinheiten einschließt, ist eine auswechselbare Befestigung vorteilhaft, insbesondere zum leichten Austausch bei Beschädigungen. Außerdem kann es gewünscht sein, die Befestigung der Optikeinheit an dem Sensorkopf so zu gestalten, dass ein Kollisionsschutz erreicht wird.

Das Auswechseln der Optikeinheit soll möglichst einfach und ohne Werkzeug möglich sein. Gleichzeitig werden extrem hohe Anforderungen an die Präzision der Positionierung der Optikeinheit relativ zu dem Sensorkopf gestellt. LCDS-Verfahren ermöglichen Abstandsmessungen mit einer Präzision im Sub-µm-Bereich. Auch die laterale Auflösung (in Richtung quer zu dem abtastenden Lichtstrahl) liegt bei wenigen µm. Selbstverständlich soll diese Qualität auch dann erhalten bleiben, wenn eine Optikeinheit auswechselbar an dem Sensorkopf befestigt wird. Demzufolge muss die Präzision der mechanischen Verbindung zwischen Optikeinheit und Sensorkopf besser als die genannten Werte der optischen Abtastung sein.

Auf dieser Grundlage liegt der Erfindung die Aufgabe zugrunde, ein Abtastsensorsystem zu schaffen, das als aufeinander abgestimmte System bestandteile einen Sensorkopf und eine Optikeinheit aufweist, wobei die Optikeinheit, vorzugsweise mehrere unterschiedliche Optikeinheiten, möglichst einfach, aber mit einer Präzision, die die Qualität der optischen Messung nicht nennenswert beeinträchtigt, mit einem Sensorkopf verbunden werden kann bzw. können.

Die Aufgabe wird gelöst durch ein Abtastsensorsystem zum berührungslosen optischen Abtasten von Objektoberflächen, welches als aufeinander abgestimmte Systemteile einen Sensorkopf und eine Optikeinheit aufweist, wobei die Optikeinheit mittels einer Befestigungseinrichtung hochpräzise an dem Sensorkopf befestigt und positioniert werden kann, die Befestigungseinrichtung eine Andruckeinrichtung einschließt, durch die die Optikeinheit gegen den Sensorkopf gedrückt wird, die Befestigungseinrichtung drei Lager aufweist, an denen eine gegen den Sensorkopf gedrückte Optikeinheit gelagert und dadurch positioniert wird, jedes der drei Lager je ein Paar von in ihrer Form und Positionierung aufeinander abgestimmten Lagerteilen mit Lagerflächen aufweist, in denen jeweils einer der Lagerteile der Lagerteilpaare in Kontakt mit mindestens einer Lagerfläche des anderen Lagerteils des Lagerteilpaares steht, jeweils ein Lagerteil der Lagerteilpaare an der Optikeinheit und das andere Lagerteil der Lagerteilpaare an dem Sensorkopf befestigt ist, und die Lagerteilpaare so ausgebildet sind, dass sie unterschiedliche Bewegungsrestriktionen für eine Lateralbewegung des jeweils einen Lagerteils des Lagerteilpaars relativ zu dem jeweils anderen Lagerteil des Lagerteilpaars in laterale Richtung, bezogen auf eine Ebene, die durch die Lager verläuft, bewirken, nämlich:
- ein erstes Lagerteilpaar keine Lateralbewegung zulässt,
- ein zweites Lagerteilpaar nur eine lineare Lateralbewegung in einer Raumrichtung zulässt und
- ein drittes Lagerteilpaar eine zweidimensionale Lateralbewegung in zwei Raumrichtungen zulässt.

Durch die Erfindung wird eine Befestigung der Optikeinheit an dem Sensorkopf erreicht, die konstruktiv einfach ist und eine einfache Handhabung ermöglicht. Insbesondere können kleine mechanische Toleranzen nicht zu einer Überbestimmung der Positionierung führen, die ein Wackeln der optischen Messeinheit relativ zu dem Sensorkopf verursachen könnte. Eine solche Überbestimmung könnte möglicherweise durch sehr starke Andruckkräfte und eine resultierende Deformation der im Kontakt zueinander stehenden Bauteile ausgeglichen werden. Dadurch würde jedoch die Präzision der Befestigung beeinträchtigt und das Ziel einer einfachen (nach Möglichkeit ohne Werkzeug realisierbaren) Handhabung nicht erreicht.

Aus der DE 3834117 A1 ist es bekannt, bei einem Abtastsensorsystem an der Trennstelle zwischen einem Sensorkopf und einer Optikeinheit Lagerteilpaare zu verwenden, die nur eine Lateralbewegung in einer Raumrichtung zulassen, wobei die Lagerteilpaare jeweils durch einen Zylinderstab und ein Kugelpaar gebildet werden. Eine gleichartige Konstruktion wird dort auch für einen Kollisionsschutz eingesetzt. Dieses System leidet unter dem vorstehend erwähnten Problem der Überbestimmung. Geringste Fertigungstoleranzen können dazu führen, dass nur zwei der jeweils drei Zylinder die jeweiligen Kugelpaare berühren. Dadurch entsteht ein Winkelfehler.

Die Erfindung wird nachfolgend anhand von in den Figuren dargestellten Ausführungsbeispielen näher erläutert. Die darin dargestellten Besonderheiten können einzeln oder in Kombination verwendet werden, um bevorzugte Ausgestaltungen der Erfindung zu schaffen. Es zeigen:
- Fig.1: eine schematische Seitenansicht eines Abtastsensor- systems mit einem Sensorkopf und drei unterschiedlichen Optikeinheiten, die auswechselbar an dem Sensorkopf an- geschlossen werden können;
- Fig. 2: eine perspektivische Seitenansicht der Befestigungsein- richtung eines erfindungsgemäßen Abtastsensorsystems;
- Fig.3: eine perspektivische Schrägansicht auf einen Befesti- gungsflansch zur Erläuterung der für die Erfindung rele- vanten geometrischen Bedingungen;
- Fig. 4: eine perspektivische Ansicht einer alternativen Befesti- gungseinrichtung eines erfindungsgemäßen Abtastsensor- systems;
- Fig. 5: eine perspektivische Ansicht des Systems von Figur 5 aus einem anderen Blickwinkel;
- Fig. 6: eine Ansicht ähnlich Figur 5 nach Entfernung eines Gehäu- seteils.

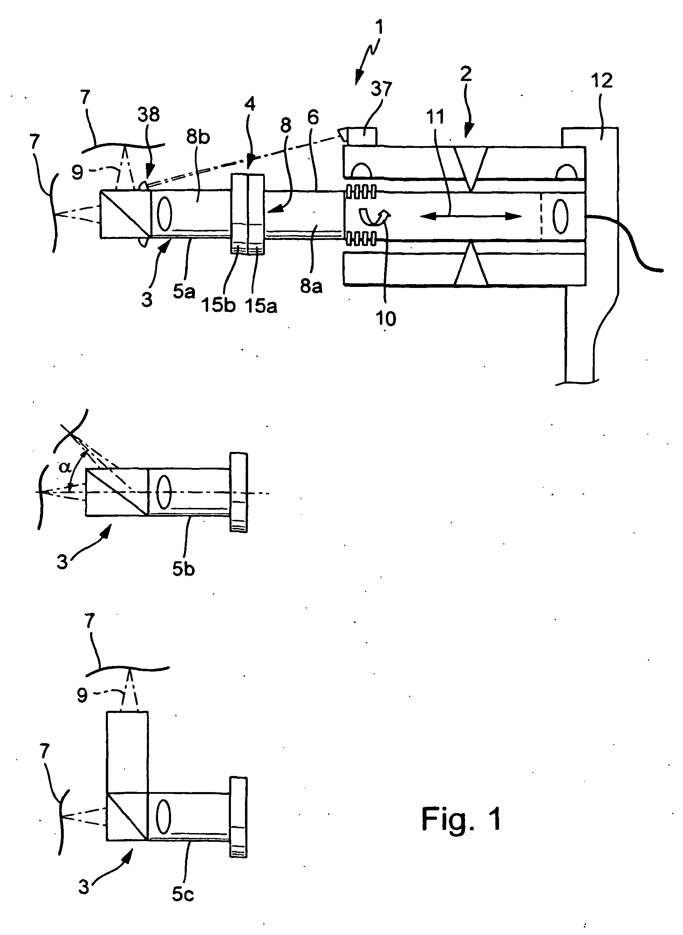

Das in Figur 1 dargestellte Abtastsystems 1 besteht aus einem als Sensorkopf 2 bezeichneten Basisteil und einer Optikeinheit 3, die mittels einer Befestigungseinrichtung 4 an dem Sensorkopf 2 befestigt werden kann. Im dargestellten Fall ist die Optikeinheit 3 in drei unterschiedlichen Ausgestaltungen verfügbar, die mit 5a, 5b und 5c bezeichnet sind und die Anpassung an unterschiedliche Aufgabenstellungen bei der Abtastung einer Objektoberfläche 7 ermöglichen.

Der in Figur 1 dargestellte Sensorkopf entspricht der WO 2007/079837. Er ermöglicht eine Rotation (Pfeil 10) und eine axiale Bewegung (Pfeil 11) eines Abtastmoduls 6, dessen vorderes Ende von der Optikeinheit 3 gebildet wird. Durch die Bewegungen des Abtastmoduls 6 kann ein Abtastlichtstrahl 9 über die Objektoberfläche 7 bewegt werden.

Figur 1 verdeutlicht, dass das Sensorsystem 1 durch Auswechseln der Optikeinheit an unterschiedliche Abtastaufgaben angepasst werden kann. Beispielsweise ermöglicht die Optikeinheit 5a die Abtastung von zwei im wesentlichen senkrecht zueinander verlaufenden Objektoberflächen, während die Optikeinheit 5b die gleiche Möglichkeit für schräg zueinander geneigte Objektoberflächen bietet. Die Optikeinheit 5c ist ebenso wie die Optikeinheit 5a für das Abtasten senkrecht zueinander verlaufender Flächen geeignet, wobei der laterale Abstand der seitlichen Objektoberfläche in diesem Fall größer ist.

Wenn das in Figur 1 dargestellte Abtastsensorsystem stationär befestigt ist, ist es zur Abtastung eines relativ engen räumlichen Bereiches an einem stationären Objekt oder an einem Objekt, das an dem Abtastsensorsystem vorbeibewegt wird, geeignet. Wenn größere Oberflächenbereiche abgetastet werden sollen, kann das Abtastsensorsystem an einer Positionierungseinrichtung, beispielsweise in Form einer Koordinatenmessmaschine oder in Form eines Positionierungsroboters, befestigt werden. In Figur 1 ist von einer solchen Positionierungseinrichtung lediglich eine Halterung 12 zur Befestigung des Abtastsensors angedeutet.

Insoweit weist das in Figur 1 dargestellte Abtastsensorsystem keine für die vorliegende Erfindung relevanten Besonderheiten auf. Hinsichtlich weiterer Einzelheiten kann auf die bereits zitierten Dokumente verwiesen werden.

Die erfindungsgemäße Besonderheit des in Figur 1 dargestellten Abtastsensorsystems bezieht sich auf die Befestigungseinrichtung, durch die die Optikeinheit mit dem Sensorkopf verbunden ist. Es geht dabei insbesondere um Anwendungsfälle, bei denen - wie im dargestellten Fall - ein optischer Kanal 8, in welchem der für das Abtasten verwendete Messlichtstrahl mittels einer Freistrahloptik geführt wird, aus zwei Teilabschnitten besteht, von denen ein erster Teilabschnitt 8a Bestandteil des Sensorkopfes 2 und ein zweiter Teilabschnitt 8b Bestandteil der Optikeinheit 3 ist. Bei einer solchen Konstruktion führen geringe Änderungen der Positionierung der beiden Teilabschnitte 8a,8b des optischen Kanals - relativ zueinander - zu Ungenauigkeiten der Messung. Deshalb muss gewährleistet sein, dass die Konstruktionselemente, die die Teilabschnitte 8a und 8b des Strahlengangs innerhalb des Sensorsystems 1 definieren, bei der Befestigung mit höchster Präzision reproduzierbar positioniert werden.

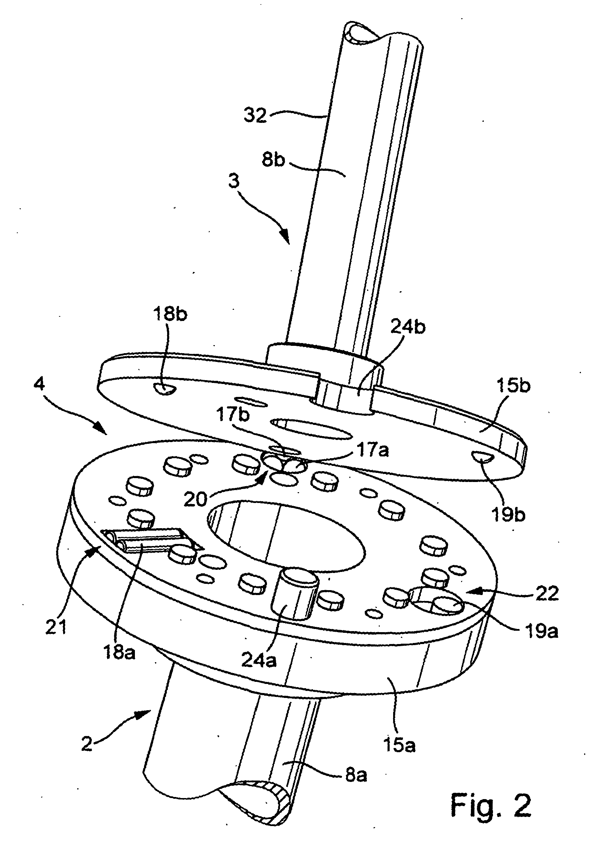

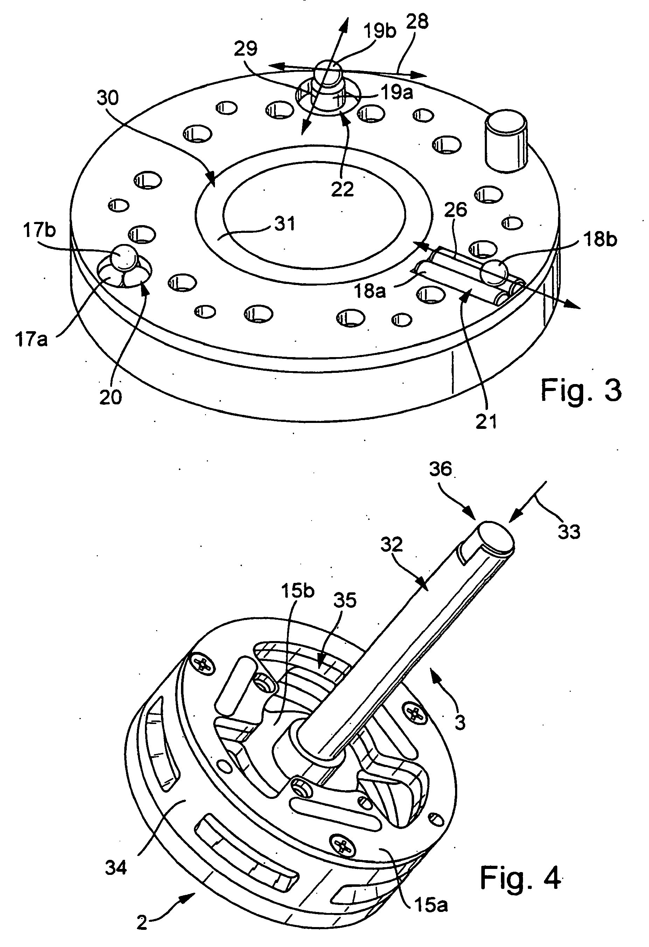

Eine Ausführungsform einer Befestigungsvorrichtung, die diese Anforderungen erfüllt, ist in den Figuren 2 und 3 dargestellt. Die beiden Teilabschnitte 8a,8b des optischen Kanals 8, die miteinander verbunden werden sollen, weisen jeweils an ihrem einander zugewandten Ende Befestigungsflansche 15a,15b auf, die sich von der Achse des optischen Kanals 8 in radialer Richtung erstrecken. Jeder der Befestigungsflansche 15a,15b trägt drei Lagerteile 17a,18a,19a bzw. 17b,18b,19b, die im zusammengebauten Zustand der Systemteile 2 und 3 jeweils ein Lager 20,21,22 bilden. Mittels der drei Lager 20,21,22 wird die Optikeinheit 3 gelagert und positioniert, wenn sie in axialer Richtung gegen den Sensorkopf 2 gedrückt wird.

Beim Ansetzen der Optikeinheit 3 an den Sensorkopf 2 wird die korrekte Drehposition durch geometrische Indexierungsteile gewährleistet, die das Zusammensetzen der beiden Befestigungsflansche 15a,15b nur in einer einzigen Drehposition ermöglichen. Im dargestellten Fall werden diese Indexierungsteile 24a,24b durch einen an einem der Befestigungsflansche 15a angebrachten Zylinderstift und durch eine hierzu korrespondierende Ausnehmung in dem anderen Flanschteil 15b gebildet.

Für die Funktion der Befestigungsvorrichtung ist wesentlich, dass die Lagerteilpaare 17a,17b; 18a,18b und 19a,19b unterschiedliche Bewegungsrestriktionen für eine Lateralbewegung des jeweils einen Lagerteils des Lagerteilpaars relativ zu dem jeweils anderen Lagerteil des Lagerteilpaars in lateraler Richtung, bezogen auf die Lagerebene, die durch die Lager 20,21,22 verläuft, bewirken. Diese Bewegungsrestriktionen resultieren aus den Formgebungen der in Kontakt zueinander stehenden Lagerflächen, wie nachfolgend anhand von Figur 3 erläutert wird.

Bei jedem der in den Figuren 3 und 4 dargestellten Lagerteilpaare hat das eine Lagerteil eine einzige Lagerfläche, die im dargestellten Fall sphärisch gekrümmt ist. In Figur 3 sind die Lagerteile 17b,18b und 19b als vollständige Kugeln abgebildet. Selbstverständlich kommt es aber nur auf diejenigen Teilflächen der Lagerteile an, die in Kontakt zu dem jeweils anderen Lagerteil des Lagerteilpaares stehen und die jeweilige Lagerfläche bilden. In den Figuren 2 und 3 erkennt man beispielsweise halbkugelförmige Lagerteile 17b,18b und 19b.

Die Krümmung muss nicht notwendigerweise sphärisch sein, Insbesondere sind auch Formen der Lagerteile 17b,18b,19b möglich, bei denen die Lagerfläche eine andere (nicht-sphärische) konvexe Form hat, wobei die Lagerfläche bevorzugt als Rotationsfläche geformt ist, deren Rotationsachse quer zu der durch die Lager 20,21,22 verlaufende Lagerebene verläuft. Vorzugsweise ist die Rotationsachse, um die die Erzeugende der Rotationsfläche rotiert, senkrecht zu der Lagerebene orientiert. Es sind jedoch auch andere Orientierungen möglich, bei denen die Achse der Rotationsfläche in dem Sinne quer zu der Lagerebene verläuft, dass sie diese schneidet und ihre Form die gewünschte Bewegungsrestriktion im Zusammenwirken mit dem anderen Lagerteil des Lagerteilpaares sicherstellt.

Der jeweils andere Lagerteil 17a,18a,19a der Lagerteilpaare ist für die drei Lager 20,21,22 derartig unterschiedlich gestaltet, dass die gewünschten unterschiedlichen Bewegungsrestriktionen resultieren:
a) Im Falle des ersten Lagerteilpaares, das das Lager 20 bildet, ist der andere Lagerteil (der bei der dargestellten Ausführungsform an dem Befestigungsflansch 15a angeordnet ist) derartig ausgebildet, dass keine Lateralbewegung in der Lagerebene möglich ist. Dies wird im dargestellten Fall durch drei kugelförmig (sphärisch) gekrümmte Oberflächen erreicht, die dem anderen Lagerteil 17b zugewandt sind und Lagerflächen bilden, die mit der Lagerfläche des Lagerteils 17b in Kontakt stehen. Die gewünschte Bewegungsrestriktion kann auch mit anderen Rotationsflächenformen erreicht werden, wobei der Lagerteil 17a vorzugsweise jedenfalls drei konvex in Richtung auf den anderen Lagerteil 17b gekrümmte Lagerflächen hat. Auch hier gilt, dass die konvex gekrümmte Lagerfläche vorzugsweise eine Rotationsfläche ist, deren Rotationsachse im gleichen Sinn, wie vorstehend diskutiert, quer zu der Lagerebene verläuft.
b) Im Falle des zweiten Lagers 21 ist der andere Lagerteil 18a so ausgebildet, dass das zweite Lagerteilpaar 18a,18b nur eine durch den Doppelpfeil 26 symbolisierte lineare Lateralbewegung in der erwähnten Ebene zulässt. Dies ist im dargestellten Fall dadurch realisiert, dass der Lagerteil 18a zwei kreiszylindrisch gekrümmte Lagerflächen aufweist, deren Zylinderachse parallel zu der Lagerebene verläuft. Alternativ kommt auch eine andere Formgebung der Lagerflächen in Betracht, die die gewünschte Bewegungsrestriktion gewährleistet. Insbesondere kommen Lagerflächen in Betracht, die in einer senkrecht zu der zulässigen Lateralbewegung (Pfeil 26) verlaufenden Ebene konvex gekrümmt, hingegen in der Raumrichtung der zulässigen Lateralbewegung gerade verlaufen. Es handelt sich dabei insbesondere um Rotationsflächen mit einer gerade Erzeugenden.
c) Der andere Lagerteil 19a des dritten Lagers 22 ist so geformt, dass es zweidimensionale Lateralbewegungen (Pfeile 28,29), also beliebige Bewegungen innerhalb der Lagerebene, zulässt, Dies wird im dargestellten Fall durch eine ebene (mit der Lagerebene coplanare) Lagerfläche des Lagerteils 19a erreicht.

Der für die Befestigung der Optikeinheit 3 an dem Sensorkopf 2 erforderliche Druck wird durch eine insgesamt mit 30 bezeichnete Andruckeinrichtung gewährleistet, die vorzugsweise mindestens einen Magnet einschließt, der im Bereich der Befestigungsvorrichtung an einem der Systemteile, also an der Optikeinheit 3 oder dem Sensorkopf 2, befestigt ist. Beispielsweise kann, wie in Figur 3 dargestellt, ein (im dargestellten Fall ringförmiger) Permanentmagnet 31 in einem der Flansche 15a oder 15b eingelassen sein. Das gegenüberliegende Systemteil muss aus einem magnetischen Material bestehen, so dass es gegen diesen Permanentmagneten gezogen wird. Vorzugsweise werden zwei Permanentmagnete, deren ungleichnamige Pole einander zugewandt sind, verwendet.

Bei der in den Figuren dargestellten Ausführungsform sind - wie bereits erläutert - die Lagerteile 17b,18b,19b der Optikeinheit 3 nicht unmittelbar an dem den optischen Kanal 8b umschließenden Gehäuseteil (d.h. der in den Figuren 2 und 4 bis 6 dargestellte Messnadel 32) angeordnet, sondern an dem Flansch 15b, der sich von der Achse des in der Optikeinheit 3 verlaufenden optischen Kanals 8b radial nach außen erstreckt. Durch den daraus resultierenden größeren radialen Abstand von der optischen Achse wird eine stabilere Befestigung, insbesondere hinsichtlich der Winkelabweichung zwischen optischen Achse in den Kanal 8b der Optikeinheit 3 und der optischen Achse in den Kanal 8a in dem Sensorkopf 2 erreicht. Der Abstand der Lagerteile 17b,18b,19b (genauer gesagt die kürzeste Entfernung einer Lagerfläche dieser Lagerteile) von der Achse des optischen Kanals 8b sollte mindestens 5mm, bevorzugt mindestens 10mm und besonders bevorzugt mindestens 15mm betragen.

Ein zusätzlicher Vorteil der anhand der Figuren 2 und 3 beschriebenen Befestigungsvorrichtung besteht darin, dass sie einen Kollisionsschutz für den Fall bildet, dass die (nur in Figur 2 dargestellte) Messnadel 32, die den optischen Kanal 8b im Bereich der Optikeinheit 3 bildet, im Betrieb mit in ihrer Umgebung befindlichen Teilen kollidiert. Die Befestigung mit Hilfe einer lösbaren, vorzugsweise magnetischen, Andruckkraft und den beschriebenen Lagern 20 bis 22 gewährleistet, dass im Falle eines seitlichen Stoßes gegen die Messnadel 32 die Optikeinheit 3 (etwa wie in den Figuren 2 und 3 dargestellt) eine Kippbewegung ausführt, bei der sie sich von dem Sensorkopf 2 löst. Durch diesen Kollisionsschutz kann eine Beschädigung der Optikeinheit 3 und insbesondere der Messnadel 32 vermieden werden.

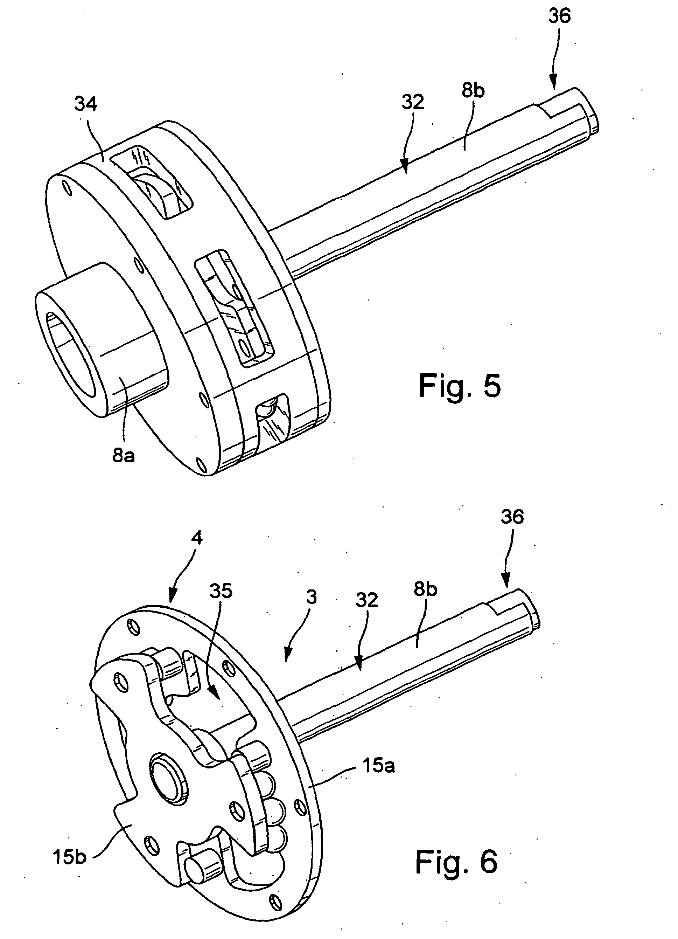

Bei der in den Figuren 2 und 3 dargestellten Ausführungsform ist allerdings kein Kollisionsschutz für Stöße gegeben, die in axialer Richtung von vorne, also in der in Figur 5 durch den Pfeil 33 symbolisierten Richtung, auf die Messnadel 32 einwirken. Die Figuren 4 bis 6 zeigen eine Konstruktion, bei der auch für diesen Fall ein Kollisionsschutz gewährleistet ist, wobei die Figuren 5 und 6 eine Befestigungseinrichtung 4 im montierten Zustand zeigen, während bei Figur 7 ein Gehäuseteil entfernt wurde, um die Funktionsteile im Inneren besser sichtbar zu machen.

Auch bei der in den Figuren 4 bis 6 dargestellten Konstruktion weist die Befestigungseinrichtung 4 zwei Befestigungsflansche 15b und 15a auf, die Bestandteil der Optikeinheit 3 bzw. des Sensorkopfes 2 sind. In diesem Fall sind jedoch der Befestigungsflansch 15b der Optikeinheit 3 und der Befestigungsflansch 15a der Sensoreinheit 2 so ausgebildet, dass ersterer durch eine zentrale Ausnehmung 35 in letzterem hindurchgesteckt werden kann. Im zusammengebauten Zustand der Systembestandteile 2,3 ist der Flansch 15b der Optikeinheit 3 in axialer Richtung weiter hinten (also weiter weg von dem freien Ende 36 der Optikeinheit 3) als der Flansch 15a des Sensorkopfes 2. Dies hat zur Folge, dass der zu der Optikeinheit 3 gehörende Abschnitt 8b des optischen Kanals 8 durch eine Ausnehmung 35 des Flansches 15a hindurch verläuft. Der Flansch 15a ist mit einem den Flansch 15b umgreifenden (käfigartigen) Gehäuseteil 34 verbunden, das die mechanische Verbindung zu dem Sensorkopf 2, also zu den Konstruktionselementen, die den optischen Kanal 8a bilden, herstellt.

Die Lager 20,21,22 sind analog zu den Figuren 2 und 3 gestaltet, jedoch auf der jeweils anderen Seite der Flansche 15a bzw. 15b vorgesehen. Die Lagerteile der Optikeinheit 3 befinden sich demzufolge auf der vorderen (dem freien Ende 36 der Nadel 32 zugewandten) Seite des Flansches 15b, während sich die Lagerteile des Sensorkopfes auf der hinteren, also dem Sensorkopf zugewandten Seite des Flansches 15a befinden.

Wenn bei der in den Figuren 4 bis 6 dargestellten Ausführungsform ein axialer Stoß von vorne in Richtung des Pfeiles 33 auf die Messnadel 32 erfolgt, kann sich die Optikeinheit 3 von dem Sensorkopf 2 lösen, so dass auch im Falle eines solchen axialen Stoßes eine Beschädigung vermieden wird.

Um eine Kollision zu detektieren wird vorzugsweise eine Lichtschranke verwendet, durch die eine aus der Kollision resultierende Bewegung der Optikeinheit 3 detektiert wird. Eine entsprechende Lichtschrankeneinrichtung 37 kann beispielsweise, wie in Figur 1 dargestellt, an dem ortsfesten (nicht rotierenden) Teil der Sensoreinheit 2 befestigt sein. Der Lichtstrahl der (beispielsweise nach dem Reflexionsverfahren arbeitenden) Lichtschrankeneinrichtung 37 ist auf das vordere (freie) Ende 36 der Optikeinheit 3 gerichtet und so ausgebildet, dass sie jede durch eine Kollision verursachte Bewegung der Optikeinheit detektiert. Hierzu kann beispielsweise an der Optikeinheit 3 ein zu deren Rotationsachse rotationssymmetrischer Spiegelkranz 38 vorgesehen sein.

Selbstverständlich können die vorstehend erläuterten Ausführungsformen in vielerlei Hinsicht abgewandelt werden. Die nachfolgenden Hinweise geben Beispiele möglicher Abwandlungen, die jedoch keineswegs abschließend zu verstehen sind:
- Die Bauteile, die den optischen Kanal 8 mit seinen Abschnitten 8a und 8b bilden, sind in den Figuren als geschlossene Rohre dargestellt. Dies ist nicht immer notwendig. Insbesondere wenn bei dem gewählten optischen Abtastverfahren Störungen durch Fremdlicht keine Rolle spielen, ist auch eine offene Bauweise des optischen Kanals möglich.
- Ähnliches gilt für die Flansche, die selbstverständlich auch als unterbrochene, beispielsweise gitterartige, Konstruktion realisiert sein können. Auch die äußere Form der Flansche kann (wie beispielhaft die Figuren 4 bis 6 zeigen) sehr unterschiedlich gestaltet sein.
- Wie sich schon aus den erläuterten Beispielen ergibt, ist der Begriff Lagerteil nicht dahingehend zu verstehen, dass es sich jeweils um ein diskretes Bauelement handelt. Vielmehr bezeichnet der Begriff jeweils einen Teil der Lager 20,21,22, der an der Optikeinheit bzw. an dem Sensorkopf angeordnet ist. Jeder der Lagerteile kann - abhängig von der konkreten konstruktiven Ausgestaltung - aus mehreren Elementen bestehen, aber auch integral an der Optikeinheit bzw. dem Sensorkopf (insbesondere an deren Befestigungsflanschen) ausgebildet sein. Entscheidend ist, dass die Lagerteile so zusammenwirken, dass die definierten Restriktionen erreicht werden.

## Patentansprüche

1. Abtastsensorsystem zum berührungslosen optischen Abtasten von Objektoberflächen, welches als aufeinander abgestimmte Systemteile einen Sensorkopf (2) und eine Optikeinheit (3) aufweist, wobei die Optikeinheit (3) mittels einer Befestigungseinrichtung (4) hochpräzise an dem Sensorkopf (2) befestigt und positioniert werden kann,
die Befestigungseinrichtung (4) eine Andruckeinrichtung (30) einschließt, durch die die Optikeinheit (3) gegen den Sensorkopf (2) gedrückt wird,
die Befestigungseinrichtung (4) drei Lager (20,21,22) aufweist, an denen eine gegen den Sensorkopf (2) gedrückte Optikeinheit (3) gelagert und **dadurch** positioniert wird,
jedes der drei Lager (20,21,22) je ein Paar von in ihrer Form und Positionierung aufeinander abgestimmten Lagerteilen (17a,17b;18a,18b;19a,19b) mit Lagerflächen aufweist, in denen jeweils eines der Lagerteile (17a,18a,19a) der Lagerteilpaare in Kontakt mit mindestens einer Lagerfläche des anderen Lagerteils (17b,18b,19b) des Lagerteilpaares steht, und
jeweils ein Lagerteil (17b,18b,19b) der Lagerteilpaare an der Optikeinheit (3) und der andere Lagerteil (17a,18a,19a) der Lagerteilpaare an dem Sensorkopf (2) angeordnet ist,
**dadurch gekennzeichnet, dass**
die Lagerteilpaare so ausgebildet sind, dass sie unterschiedliche Bewegungsrestriktionen für eine Lateralbewegung des jeweils einen Lagerteils (17a,18a,19a) des Lagerteilpaars relativ zu dem jeweils anderen Lagerteil (17b,18b,19b) des Lagerteilpaars in lateraler Richtung, bezogen auf eine Lagerebene, die durch die Lager (20,21,22) verläuft, bewirken, nämlich:
- ein erstes Lagerteilpaar (17a,17b) keine Lateralbewegung zulässt,
- ein zweites Lagerteilpaar (18a,18b) nur eine lineare Lateralbewegung in einer Raumrichtung zulässt und
- ein drittes Lagerteilpaar (19a,19b) eine zweidimensionale Lateralbewegung in zwei Raumrichtungen zulässt.

2. System nach Anspruch 1, **dadurch gekennzeichnet, dass** jeweils einer der Lagerteile (17b,18b,19b) der Lagerteilpaare eine konvex gekrümmte Lagerfläche hat, insbesondere eine als Rotationsfläche geformte Lagerfläche, deren Rotationsachse quer, vorzugsweise senkrecht, zu der durch die Lager (20,21,22) verlaufenden Ebene verläuft.

3. System nach einem der vorhergehenden Ansprüche, **dadurch gekennzeichnet, dass** eines der Lagerteile (17a) des ersten Lagerteilpaares drei konvex gekrümmte Lagerflächen hat, insbesondere als Rotationsflächen geformte Lagerflächen, deren Rotationsachsen quer, vorzugsweise senkrecht, zu der durch die Lager (20,21,22) verlaufenden Ebene verlaufen.

4. System nach einem der vorhergehenden Ansprüche, **dadurch gekennzeichnet, dass** einer der Lagerteile (18a) des zweiten Lagerteilpaares zwei nur in einer Ebene konvex gekrümmte Lagerflächen hat, insbesondere Rotationsflächen mit einer geraden Erzeugenden.

5. System nach einem der vorhergehenden Ansprüche, **dadurch gekennzeichnet, dass** eines der Lagerteile (19a) des dritten Lagerteilpaares eine ebene Lagerfläche hat.

6. System nach einem der vorhergehenden Ansprüche, **dadurch gekennzeichnet, dass** die Andruckeinrichtung (30) zur Erzeugung der zwischen dem Sensorkopf und der Wechseloptik wirkenden Haltekraft mindestens einen Magnet (31) einschließt, der im Bereich der Befestigungsvorrichtung (4) an einem der Systemteile (2,3) angeordnet ist.

7. System nach einem der vorhergehenden Ansprüche, **dadurch gekennzeichnet, dass** die Lagerteile (17b,18b,19b) der Optikeinheit (3) an einem Befestigungsflansch (15b) der Optikeinheit (3) angeordnet sind, der sich von einem optischen Kanal (8b) radial nach außen erstreckt.

8. System nach Anspruch 7, **dadurch gekennzeichnet, dass** der Abstand der Lagerfläche der Lagerteile (17b,18b,19b) der Optikeinheit (3) von der Achse eines in der Optikeinheit (3) verlaufenden optischen Kanals (8b) mindestens 5mm, bevorzugt mindestens 10mm und besonders bevorzugt mindestens 15mm beträgt.

9. System nach Anspruch 7 oder 8, **dadurch gekennzeichnet, dass** zur Gewährleistung eines Kollisionsschutzes gegen Stöße auf das freie Ende (36) der Optikeinheit (3) in Richtung von deren Längsachse (Pfeil 33)
der Sensorkopf (2) einen Befestigungsflansch (15a) mit einer zentralen Ausnehmung (35) aufweist,
der Befestigungsflansch (15b) der Optikeinheit (3) so ausgebildet ist, dass er zur Befestigung der Optikeinheit (3) an dem Sensorkopf (2) durch die zentrale Ausnehmung (35) des Befestigungsflansches (15a) des Sensorkopfes (2) hindurchgeführt werden kann, so dass der Befestigungsflansch (15b) der Optikeinheit (3) sich im zusammengesetzten Zustand der Optikeinheit (3) und des Sensorkopfes (2) auf der von dem freien Ende (36) der Optikeinheit (3) abgewandten hinteren Seite des Befestigungsflansches (15a) des Sensorkopfes (2) befindet,
die Lagerteile (17b,18b,19b) der Optikeinheit (3) auf der ihrem freien Ende zugewandten vorderen Seite des Befestigungsflansches (15b) der Optikeinheit (3) angeordnet sind, und
die Lagerteile (17a,18a,19a) des Sensorkopfes (2) auf der von dem freien Ende der Optikeinheit (3) abgewandten hinteren Seite des Befestigungsflansches (15a) der Sensoreinheit (2) angeordnet sind.

## Claims

1. Scanning sensor system for noncontact optical scanning of object surfaces, the system comprising, as mutually adapted system components, a sensor head (2) and an optics unit (3), wherein
the optics unit (3) can be attached and positioned with high precision on the sensor head (2) by means of a fixing device (4),
the fixing device (4) comprises a pressing-on device (30) which presses the optics unit (3) toward the sensor head (2),
the fixing device (4) comprises three bearings (20, 21, 22), by which an optics unit (3) pressed against the sensor head (2) is borne and thereby positioned,
each of the three bearings (20, 21, 22) comprises a pair of bearing parts (17a, 17b; 18a, 18b; 19a, 19b) adapted to one another with respect to their shape and positioning, the bearing parts having bearing surfaces in which one of the bearing parts (17a, 18a, 19a) of each of said bearing part pairs is in contact with at least one bearing surface of the other bearing part (17b, 18b, 19b) of said bearing part pair, and
one bearing part (17b, 18b, 19b) of each bearing part pair is located at the optics unit (3) and the other bearing part (17a, 18a, 19a) of said bearing part pair is located at the sensor head (2),
**characterized in that**
the bearing part pairs are configured in such a manner that they effect different restrictions of lateral movements of one bearing part (17a, 18a, 19a) of the bearing part pair relative to the other bearing part (17b, 18b, 19b) of the bearing part pair in the lateral direction, relative to a plane running through the bearings (20, 21, 22), namely that:
- a first bearing part pair (17a, 17b) allows no lateral movement,
- a second bearing part pair (18a, 18b) allows only a linear lateral movement in one spatial direction, and
- a third bearing part pair (19a, 19b) allows a two-dimensional lateral movement in two spatial directions.

2. System according to claim 1, **characterized in that** one of the bearing parts (17b, 18b, 19b) of each bearing part pair has a convexly curved bearing surface, in particular a bearing surface formed as a surface of revolution with an axis of rotation running transversely, preferably perpendicularly to the plane running through the bearings (20, 21, 22).

3. System according to any one of the preceding claims, **characterized in that** one of the bearing parts (17a) of the first bearing part pair has three convexly curved bearing surfaces, in particular bearing surfaces formed as surfaces of revolution with axes of rotation running transversely, preferably perpendicularly to the plane running through the bearings (20, 21, 22).

4. System according to any one of the preceding claims, **characterized in that** one of the bearing parts (18a) of the second bearing part pair has two bearing surfaces which are convexly curved only in one plane, in particular surfaces of revolution having a straight generating line.

5. System according to any one of the preceding claims, **characterized in that** one of the bearing parts (19a) of the third bearing part pair has a flat bearing surface.

6. System according to any one of the preceding claims, **characterized in that** the pressing-on device (30) for producing a retaining force acting between the sensor head and the optics unit comprises at least one magnet (31), which is located at one of the system parts (2, 3) in the vicinity of the fixing device (4).

7. System according to any one of the preceding claims, **characterized in that** the bearing parts (17b, 18b, 19b) of the optics unit (3) are located at a fixing flange (15b) of the optics unit (3), the fixing flange extending radially outward from an optical channel (8b).

8. System according to claim 7, **characterized in that** the distance of the bearing surfaces of the bearing parts (17b, 18b, 19b) of the optics unit (3) from the axis of an optical channel (8b) running in the optics unit (3) is at least 5 mm, preferably at least 10 mm, and particularly preferably at least 15 mm.

9. System according to any one of claims 7 or 8, **characterized in that**, in order to protect against impacts on the free end (36) of the optics unit (3) in the direction of its longitudinal axis (arrow 33),
the sensor head (2) has a fixing flange (15a) with a central recess (35),
the fixing flange (15b) of the optics unit (3) is configured so that it can be passed through the central recess (35) of the fixing flange (15a) of the sensor head (2) for attaching the optics unit (3) on the sensor head (2), so that in the joined state of the optics unit (3) and the sensor head (2), the fixing flange (15b) of the optics unit (3) is located on the rear side of the fixing flange (15a) of the sensor head (2) facing away from the free end (36) of the optics unit (3),
the bearing parts (17b, 18b, 19b) of the optics unit (3) are located on the front side of the fixing flange (15b) of the optics unit (3) facing its free end, and
the bearing parts (17a, 18a, 19a) of the sensor head (2) are located on the rear side of the fixing flange (15a) of the sensor unit (2) facing away from the free end of the optics unit (3).

## Revendications

1. Système capteur pour le balayage optique sans contact de surfaces d'objet qui présente une tête de capteur (2) et une unité optique (3) à titre de parties coordonnées du système, dans lequel
l'unité optique (3) peut être fixée et positionnée de façon très précise au moyen d'un dispositif de fixation (4) sur la tête de capteur (2),
l'unité de fixation (4) inclut un dispositif de pression (30) par lequel l'unité optique (3) est pressée contre la tête de capteur (2),
le dispositif de fixation (4) présente trois paliers (20, 21, 22) sur lesquels est logée une unité optique (3) pressée contre la tête de capteur (2) qui est ainsi positionnée,
chacun des trois paliers (20, 21, 22) présente chacun une paire de parties de palier (17a, 17b ; 18a, 18b ; 19a, 19b) coordonnées dans leur forme et position avec des surfaces de palier, dans lesquelles à chaque fois l'une des parties de palier (17a, 18a, 19a) des paires de parties de palier est en contact avec au moins une surface de palier de l'autre partie de palier (17b, 18b, 19b) de la paire de parties de palier et
à chaque fois une partie de palier (17b, 18b, 19b) des paires de parties de palier est disposée sur l'unité optique (3) et l'autre partie de palier (17a, 18a, 19a) des paires de parties de palier est disposée sur la tête de capteur (2),
**caractérisé en ce que** les paires de parties de palier sont formées de telle façon qu'elles provoquent différentes restrictions de mouvement pour un mouvement latéral de respectivement une partie de palier (17a, 18a, 19a) de la paire de parties de palier par rapport à respectivement l'autre partie de palier (17b, 18b, 19b) de la paire de parties de palier dans la direction latérale, par rapport à un plan de palier, qui s'étend à travers les paliers (20, 21, 22), à savoir :
- une première paire de parties de palier (17a, 17b) ne permet aucun mouvement latéral,
- une deuxième paire de parties de palier (18a, 18b) ne permet qu'un mouvement latéral linéaire dans une direction spatiale et
- une troisième paire de parties de palier (19a, 19b) permet un mouvement latéral bidimensionnel dans deux directions spatiales.

2. Système selon la revendication 1, **caractérisé en ce que**, à chaque fois, l'une des parties de palier (17b, 18b, 19b) des paires de parties de palier possède une surface de palier courbée de façon convexe, en particulier une surface de palier formée en tant que surface de rotation, dont l'axe de rotation se prolonge transversalement, de préférence perpendiculairement, au plan se prolongeant à travers les paliers (20, 21, 22).

3. Système selon l'une quelconque des revendications précédentes, **caractérisé en ce que** l'une des parties de palier (17a) de la première paire de parties de palier, possède trois surfaces de palier courbées de façon convexe, en particulier des surfaces de palier formées en tant que surfaces de rotation, dont les axes de rotation se prolongent transversalement, de préférence perpendiculairement, au plan se prolongeant à travers les paliers (20, 21, 22).

4. Système selon l'une quelconque des revendications précédentes, **caractérisé en ce que** l'une des parties de palier (18a) de la deuxième paire de parties de palier possède deux surfaces de palier courbées de façon convexe uniquement dans un plan, en particulier des surfaces de rotation avec une génératrice droite.

5. Système selon l'une quelconque des revendications précédentes, **caractérisé en ce que** l'une des parties de palier (19a) de la troisième paire de parties de palier possède une surface de palier plane.

6. Système selon l'une quelconque des revendications précédentes, **caractérisé en ce que** le dispositif de pression (30) pour produire la force de maintien qui agit entre la tête de capteur et l'optique interchangeable inclut au moins un aimant (31), qui est disposé dans la région du dispositif de fixation (4) sur l'une des parties du système (2, 3).

7. Système selon l'une quelconque des revendications précédentes, **caractérisé en ce que** les parties de palier (17b, 18b, 19b) de l'unité optique (3) sont disposées sur une collerette de fixation (15b) de l'unité optique (3), qui s'étend radialement vers l'extérieur à partir d'un canal optique (8b).

8. Système selon la revendication 7, **caractérisé en ce que** la distance entre la surface de palier des parties de palier (17b, 18b, 19b) de l'unité optique (3) et l'axe d'un canal optique (8b) s'étandant dans l'unité optique (3) est d'au moins 5 mm, de préférence d'au moins 10 mm et de manière particulièrement préférée d'au moins 15 mm.

9. Système selon la revendication 7 ou 8, **caractérisé en ce que**, pour garantir une protection de collision contre les chocs sur l'extrémité libre (36) de l'unité optique (3) dans la direction de son axe longitudinal (flèche 33)
la tête de capteur (2) présente une collerette de fixation (15a) avec un évidement central (35),
la collerette de fixation (15b) de l'unité optique (3) est formée de telle façon que pour fixer l'unité optique (3) sur la tête de capteur (2), elle peut être guidée à travers l'évidement central (35) de la collerette de fixation (15a) de la tête de capteur (2) de sorte que la collerette de fixation (15b) de l'unité optique (3) se trouve, dans l'état assemblé de l'unité optique (3) et de la tête de capteur (2), sur le côté arrière de la collerette de fixation (15a) de la tête de capteur (2), le côté arrière faisant dos à l'extrémité libre (36) de l'unité optique (3),
les parties de palier (17b, 18b, 19b) de l'unité optique (3) sont disposées sur le côté avant tourné vers son extrémité libre de la collerette de fixation (15b) de l'unité optique (3), et
les parties de paliers (17a, 18a, 19a) de la tête de capteur (2) sont disposées sur le côté arrière de la collerette de fixation (15a) de l'unité de capteur (2), le côté arrière faisant dos à l'extrémité libre de l'unité optique (3).
